# EUROPEAN PATENT APPLICATION

(11) **EP 0 869 685 A2**
(43) Date of publication of application: **07.10.1998**
(21) Application number: 98302507.3
(22) Date of filing: 31.03.1998
(51) Int. Cl.: H04N 17/00

(54) **Automatic measurement of subjective video quality**

(30) Priority: 04.04.1997 US 833408
(71) Applicant: TEKTRONIX, INC., Wilsonville, Oregon 97070-1000 (US)
(72) Inventor: Ferguson, Kevin M., Beaverton, Oregon 97005 (US)
(74) Representative: Molyneaux, Martyn William

(57) **Abstract**

Automatic measurement of subjective video quality is performed by obtaining the difference between a video signal to be measured and a reference signal from which the video signal is derived. The resulting difference signal is edge detected and then integrated to produce a predicted subjective quality rating for the video signal.

## Description

### BACKGROUND OF THE INVENTION

The present invention relates to test and measurement of video image signals, and more particularly to the automatic measurement of subjective video quality in order to provide ease of implementation while being robust as well as providing increased speed of execution.

Prior subjective video quality measurements first individually filters both a reference video signal and a derivative of the reference, the quality of which is to be determined. The difference between the two filtered signals is obtained, and the energy of this difference is integrated.

What is desired is a computational simplification that takes advantage of the optimizations of the individual blocks of the prior art.

### BRIEF SUMMARY OF THE INVENTION

Accordingly the present invention provides automatic measurement of subjective video quality by obtaining the difference between a reference and a derivative video signal, and then performing edge detection on the difference video signal prior to integration. The resulting output is a predicted subjective quality rating for the derivative video signal.

The objects, advantages and other novel features of the present invention are apparent from the following detailed description when read in conjunction with the appended claims and attached drawing.

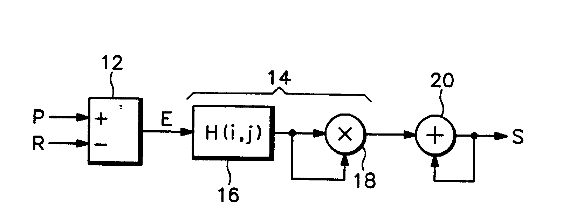

### BRIEF DESCRIPTION OF THE SEVERAL VIEWS OF THE DRAWING

The Figure is a block diagram/flow chart view of automatic measurement of subjective video quality according to the present invention.

### DETAILED DESCRIPTION OF THE INVENTION

Referring now to the Figure a video signal to be measured **P** is input to a difference circuit or step **12** together with a reference signal **R** from which the video signal is derived. The two signals **P**, **R** may have undergone various preprocessing stages including average picture level, gain, horizontal and vertical translation adjustments, temporal filters, spatial filters and/or processing to model human visual perception. The resulting difference signal **E** from the difference circuit or step **12** is input to an edge detector circuit or step **14**. The edge detector circuit or step **14** includes a filter block **16** having a specified filter function **H(i,j)** followed by a squaring block **18**. The filter block **16** may have one or more two-dimensional (2D) linear filters corresponding to template edges, each followed by one of the squaring blocks **18**. The output(s) from the squaring block(s) **18** is input to a summing, or integrating, circuit or step **20**. A SOBEL filter edge detector, less the square root function, may be used as the edge detector circuit or step **14**. The output **S** of the summing circuit or step **20** corresponds to a predicted subjective quality rating of the video signal **P** with respect to the reference signal **R**.

Thus the present invention provides for automatic measurement of subjective video quality of a video signal with respect to a reference signal by following a subtraction block for the signals with an edge detector and then an integrator, eliminating one filter as opposed to the prior art.

## Claims

1. A method of automatic measurement of subjective video quality comprising the steps of:
obtaining a difference between a video signal to be measured and a reference signal to produce a difference signal;
performing edge detection on the difference signal to produce an edge detected signal; and
integrating the edge detected signal to produce a predicted subjective quality rating for the video signal with respect to the reference signal.

2. An apparatus for automatic measurement of subjective video quality comprising:
means for obtaining a difference between a video signal to be measured and a reference signal to produce a difference signal;
means for performing edge detection on the difference signal to produce an edge detected signal; and
means for integrating the edge detected signal to produce a predicted subjective quality rating for the video signal with respect to the reference signal.
